# NEUE EUROPÄISCHE PATENTSCHRIFT

(11) **EP 0 137 112 B2**
(45) Veröffentlichungstag und Bekanntmachung des Hinweises auf die Entscheidung über den Einspruch: **17.03.1993**
(45) Hinweis auf die Patenterteilung: 28.12.1988
(21) Anmeldenummer: 84106777.0
(22) Anmeldetag: 14.06.1984
(51) Int. Cl.: F16F 13/00, F16F 9/46, B60K 5/12

(54) **Zweikammer-Motorlager mit hydraulischer Dämpfung**
Two space hydraulic damping support
Support de moteur à amortissement hydraulique et comportant deux chambres

(30) Priorität: 11.10.1983 DE 3336965
(43) Veröffentlichungstag der Anmeldung: 17.04.1985
(73) Patentinhaber: METZELER Gesellschaft mit beschränkter Haftung, D-80992 München (DE)
(72) Erfinder: Härtel, Volker, Dr., D-8042 Germering (DE); Theisen, Dieter, Dr., D-8044 Lohhof (DE); Oppermann, Günter, Dr., D-5090 Leverkusen (DE)
(74) Vertreter: Michelis, Theodor, Dipl.-Ing.

(56) Entgegenhaltungen:
- DE-A- 3 024 917
- DE-A- 3 214 037
- FR-A- 1 094 516
- GB-A- 1 282 568
- GB-A- 1 282 568
- GB-A- 2 111 171
- US-A- 2 886 151
- US-A- 3 047 507
- US-A- 3 059 915
- PATENTS ABSTRACTS OF JAPAN, Band 5, Nr. 199 (M-102) [871], 17. Dezember 1981; & JP - A - 56 116 518 (NISSAN JIDOSHA K.K.) 12.09.1981
- PATENTS ABSTRACTS OF JAPAN, Band 7, Nr. 145 (M-224) [1290], 24. Juni 1983; & JP - A - 58 57 536 (KINUGAWA GOMU KOGYO K.K.) 05.04.1983
- PATENTS ABSTRACTS OF JAPAN, Band 4, Nr. 161 (M-40) [643], 11. November 1980, Seite 164 M 40; & JP - A - 55 112 440 (TOKYO SHIBAURA DENKI K.K.) 30.08.1980
- Article of "Design Engineering", November 82, pages 41-43 "Electro-rheological devices provide hydraulic/electronic interface"

## Beschreibung

Die Erfindung bezieht sich auf ein hydraulisch dämpfendes Zweikammer-Motorlager, insbesondere für Kraftfahrzeuge, dessen beide mit einer Hydraulikflüssigkeit gefüllten Kammern gummielastische Umfangswände aufweisen und über eine quer zur Kammerlängsachse und zwischen den Kammern angeordnete starre Zwischenplatte voneinander mechanisch getrennt, jedoch über eine die Zwischenplatte durchsetzende Leitung hydraulisch miteinander in Verbindung stehen.

Ein derartiges Motorlager ist beispielsweise aus der DE-A-3 019 337 bekannt. Es spricht im allgemeinen bei hochfrequenten Schwingungen kleiner Amplitude hydraulisch nicht an, so dass diese Schwingungen nur geringfügig gedämpft werden, während bei Schwingungen niedriger werdender Frequenzen und grösser werdender Amplituden eine zunehmende Dämpfung durch zunehmenden Flüssigkeitsaustausch über die die Zwischenplatte durchsetzende Leitung erfolgt. In Abhängigkeit von Länge und Grösse dieser Leitung sowie der Viskosität der Arbeitsflüssigkeit kann eine Optimierung jedoch nur für einen bestimmten Frequenzbereich erreicht werden. Dieser Frequenzbereich ist dabei relativ schmal, so dass ein bestimmter Lagertyp jeweils für einen speziellen Belastungsfall ausgelegt werden muss. Damit stellen derartige hydraulisch gedämpfte Lager passive Dämpfungselemente dar, die bei einer bestimmten Belastung vorgegeben reagieren, ohne dass am Lager selbst eine Regel- oder Steuermöglichkeit gegeben ist.

Demgegenüber ist aus der JP-A-56 116 518 ein aktiv beeinflussbares Motorlager bekannt, bei dem die Hydraulikflüssigkeit aus einer elektromagnetischen Flüssigkeit besteht, d. h. magnetisierbare Festkörper enthält, wobei auf die Flüssigkeit im Bereich der Überströmleitung ein Magnetfeld einwirkt. Bei Einschalten des Magnetfeldes soll dabei durch ein Zusammenbacken der Eisenpulverteilchen der mögliche Strömungsquerschnitt vermindert oder ggf. auch die Viskosität der Flüssigkeit erhöht werden, so dass dadurch eine höhere Dämpfung möglich ist. Bei einer derartigen Dämpfungsflüssigkeit ist jedoch ein Absetzen der Eisenpulverteilchen nur schwer zu verhindern. Ausserdem istfüreine ausreichende Magnetisierung eine relativ hohe elektrische Leistung erforderlich.

Demgegenüber liegt der vorliegenden Erfindung die Aufgabe zugrunde, ein hydraulisch gedämpftes Motorlager zu schaffen, bei dem die Viskosität der Flüssigkeit kontinuierlich gesteuert werden kann und bei dem das Lager derart ausgebildet ist, dass mit möglichst geringer elektrischer Leistung ein hoher Wirkungsgrad erreicht werden kann.

Zur Lösung dieser Aufgabe ist erfindungsgemäß vorgesehen, daß die Leitung durch zwei im Innern der Zwischenplatte parallel zueinander und parallel zu Ober- und Unterseite der Zwischenplatte angeordnete ebene Platten begrenzt ist, deren Breite und Abstand voneinander den querschnitt der Leitung definieren, wobei der Leitungsinnenraum an einem Ende einen Durchlass zur oberen Kammer und am anderen Ende einen Durchlass zur unteren Kammer aufweist, daß die Platten Elektroden bilden, die an eine Spannungsquelle angeschlossen sind, und daß die Hydraulikflüssigkeit aus einer elektroviskosen Flüssigkeit besteht.

Grundsätzlich sind derartige elektroviskose Flüssigkeiten beispielsweise aus der US-A-2 886 151 sowie 3 047 507 bekannt. Diese Flüssigkeiten verändern beim Anlegen einer Spannung bzw. bei Auftreten eines elektrischen Feldes ihre Viskosität und können dabei je nach Grösse des Feldes dünnflüssig, dickflüssig oder praktisch auch fest sein.

Durch Verwendung einer derartigen elektroviskosen Flüssigkeit und Anlegen eines elektrischen Feldes mittels grossflächiger, ebener Elektroden lässt sich einmal die Viskosität der Flüssigkeit in weiten Grenzen steuern und zum anderen ist lediglich eine geringe elektrische Leistung zur Ansteuerung erforderlich, da lediglich eine hohe Spannung benötigt wird. Darüber hinaus bietet die Konfiguration der Überströmleitung als sehr flacher und praktisch schlitzförmiger Kanal auch bei Normalbetrieb ohne Anlegen einer Spannung besondere Vorteile hinsichtlich seiner Dämpfungswirkung auf die Flüssigkeit, da diese wegen dergrossen Berührungsflächen einer hohen Reibung unterworfen ist.

Die Durchlässe selbst können dabei schlitzförmig ausgebildet sein und sich über die gesamte Breite der Elektrodenplatten erstrecken.

Als Bezugsparameter für die jeweils erforderliche Dämpfung kann dabei die an die Plattenelektroden angelegte Spannung in Abhängigkeitvon der Motordrehzahl steuerbar sein. Es ist aber auch möglich, dass die Elektrodenspannung in Abhängigkeit vom jeweiligen Schwingungszustand mittels On-Line-Messung steuerbar sind. Zweckmässigerweise wird dazu die Beschleunigung der Befestigungspunkte des Motors ermittelt.

Als elektroviskose Flüssigkeit eignet sich besonders eine Mischung aus 40-60 Gew.-% Kieselsäure, 30-50 Gew.-% einer organischen Phase geeigneten Siedepunktes, 5-10 Gew.-% Wasser sowie 5 Gew.-% eines Dispergiermittels.

Anhand einer schematischen Zeichnung sind Aufbau und Wirkungsweise eines Ausführungsbeispiels nach der Erfindung näher erläutert. Dabei zeigen:
Fig. 1 einen Längsschnitt durch ein Zweikammer-Motorlager und
Fig. 2 eine Aufsicht auf die Zwischenplatte des Lagers.

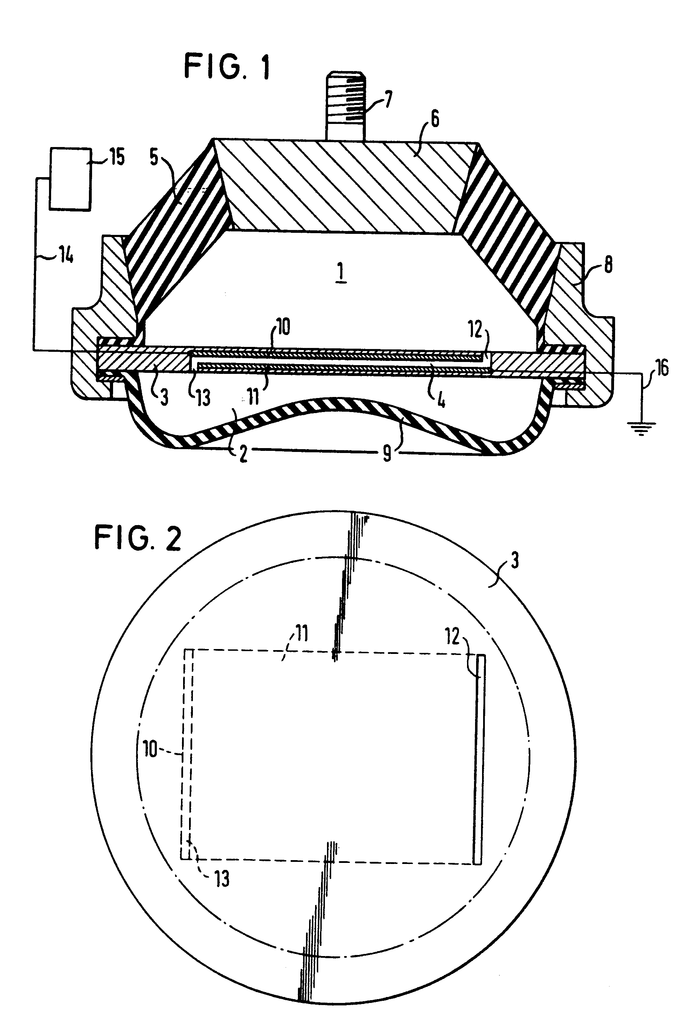

Wie aus Fig. 1 zu ersehen ist, besteht das Zweikammer-Motorlager zunächst in herkömmlicher Weise aus einer oberen Kammer 1 und einer unteren Kammer 2, die durch eine in der noch zu beschreibenden Zwischenplatte 3 verlaufenden Leitung 4 hydraulisch miteinander verbunden sind. Die obere Kammer 1 wird von einer starkwandigen, hohlkegelförmigen Kammerwandung 5 aus einem gummielastischen Material gebildet, die an der oberen Stirnseite mit einer Lagerplatte 6, an der über einen Bolzen 7 beispielsweise der Motor festgelegt sein kann, und im unteren Bereich mit dem Haltflansch 8 zum Anschluss an ein nicht näher dargestelltes Widerlager haftend verbunden ist. Die untere Kammer 2 wird von einer beispielsweise tassenförmigen Kammerwandung 9 aus ebenfalls gummielastischem, jedoch weicherem Material gebildet, die auch mit dem Flansch 8 haftend verbunden ist.

Die Leitung 4 zur hydraulischen Verbindung der beiden Kammern 1 und 2 in der Zwischenplatte 3 wird von 2 metallischen platten 10 und 11 gebildet, die in Abstand voneinander in einen entsprechenden Hohlraum der Zwischenplatte 3 eingelassen sind und deren Abstand und Breite somit den Querschnitt der Leitung 4 bestimmen. Am einen Ende der platten 10 und 11 ist ein vertikaler Durchlass 12 in die obere Kammer 1 und am anderen Ende ein ebenfalls vertikaler Durchlass 13 in die untere Kammer vorgesehen.

Wie aus der Aufsicht auf die Zwischenplatte 3 nach Fig. 2 zu ersehen ist, sind die platten 10 bzw. 11 entsprechend der gestrichelten Kontur zweckmässigerweise rechteckig ausgebildet und enden an den schlitzförmigen Durchlässen 12 bzw. 13, die sich über die gesamte Breite dieser platten erstrecken.

Die als obere Elektrode wirkende platte 10 ist ferner über eine isoliert nach aussen geführte Leitung 14 an eine regelbare Spannungsquelle 15 angeschlossen, während die als untere Elektrode wirkende Platte 11 übereine ebenfalls isoliert herausgeführte Leitung 16 an Erdpotential gelegt ist.

Beide Kammern 1 und 2 sind nunmehr mit einer elektroviskosen Flüssigkeit gefüllt, die beispielsweise aus einer Mischung von etwa 40-60 Gew.-% Kieselsäure als Feststoff, 30-50 Gew.-% einer geeigneten organischen Phase mit niedriger Dielektrizitätskonstante, wie z. B. Isododekan, 5-10 Gew.-% Wasser sowie etwa 5 Gew.-% eines Dispergiermittels bestehen kann.

Diese elektroviskose Flüssigkeit wirkt zunächst wie eine herkömmliche hydraulische Flüssigkeit und wird bei Auftreten entsprechender Schwingungen grosser Amplitude und niedriger Frequenz von der oberen Kammer 1 über die Leitung 4 in die untere Kammer 2 strömen, wobei durch die Verschiebung der in der Leitung 4 enthaltenen Flüssigkeitsmenge eine entsprechende Drosselwirkung auftritt. Bei Anlegen einer elektrischen Spannung an die beiden Elektroden 10 und 11 verändert sich jedoch dann die Viskosität der Flüssigkeit innerhalb der Leitung 4, so dass wegen der dadurch geänderten Strömungsverhältnisse das Lager ein anderes Dämpfungsverhalten zeigt. Bei entsprechender Höhe der Spannung kann die elektroviskose Flüssigkeit so fest werden, dass ein Flüssigkeitsaustausch über die Leitung 4 überhaupt nicht mehr staffindet.

Das bedeutet also, dass mit Steuerung der Viskosität der hydraulischen Flüssigkeit sowohl die Dämpfung als auch die dynamische Steifigkeit des Lagers einstellbar und an jeden beliebigen Belastungszustand anpassbar ist. Eine besonders hohe Dämpfung wird dann erzielt, wenn man erreichen kann, dass die Leitung beim Einfedern des Lagers praktisch schliesst und bei der Entlastung bzw. bei der Wiederausdehnung der oberen Kammer öffnet, da hierbei die meiste Energie entzogen wird.

Für die Einstellung der gewünschten Dämpfung bietet sich dabei z. B. eine drehzahlabhängige Steuerung über einen Drehzahlgeber an, wobei mit zunehmender Drehzahl die Dämpfung abnehmen sollte. Bei einer solchen Steuerung sollte die höchste Dämpfung zweckmässigerweise im Bereich auftretender Eigenresonanzen liegen. Damit werden Triebwerksbewegungen grosser Amplituden wirksam gedämpft, während das Lager im Bereich hoher Frequenzen durch entsprechende elektrisch gesteuerte Entkopplung auf ein akustisch günstiges Übertragungsverhalten eingestellt werden kann.

Eine weitere Möglichkeit der Steuerung besteht darin, mit einer On-Line-Messung der Lagerzustände beispielsweise die Beschleunigung der Befestigungspunkte oder auftretende Kräfte oder Wege bzw. Wegdifferenzen zu ermitteln, und etwa über einen geeigneten Regelalgorithmus jeweils die entsprechende Spannung zu erzeugen, um durch die damit erreichte Viskositätsänderung der Flüssigkeit ein Optimum an Energieentnahme und Dämpfung zu bewirken.

Mit der erfindungsgemässen Ausgestaltung sowie der Verwendung einer elektroviskosen Flüssigkeit als Hydraulikmedium lässt sich somit ein aktives Motorlager ohne bewegte Teile schaffen, mit dem die Dämpfung über einen weiten Frequenzbereich jeweils sehr schnell den auftretenden Belastungen angepasst werden kann; dies insbesondere auch deshalb, weil die Reaktionszeiten für eine Viskositätsänderung der Flüssigkeit jeweils nur wenige Millisekunden betragen, wodurch eine Echtzeitverarbeitung der Signale und eine unmittelbare Änderung des Dämpfungsverhaltens des Lagers zur erreichen ist.

## Patentansprüche

1. Hydraulisch dämpfendes Zweikammer-Motorlager, insbesondere für Kraftfahrzeuge, dessen beide mit einer Hydraulikflüssigkeit gefüllten Kammern (1, 2) gummielastische Umfangswände (5, 9) aufweisen und über eine quer zu Kammerlängsachse und zwischen den Kammern (1, 2) angeordnete starre Zwischenplatte (3) voneinander mechanisch getrennt, jedoch über eine die Zwischenplatte (3) durchsetzende Leitung (4) hydraulisch miteinander in Verbindung stehen, dadurch gekennzeichnet, daß die Leitung (4) durch zwei im Innern der Zwischenplatte (3) parallel zueinander und parallel zu Ober- und Unterseite der Zwischenplatte (3) angeordnete ebene Platten (10, 11) begrenzt ist, deren Breite und bestand voneinander den Querschnitt der Leitung definieren, wobei der Leitungsinnenraum an einem Ende einen Durchlass (12) zur oberen Kammer (1) und am anderen Ende einen Durchlass (13) zur unteren Kammer aufweist, daß die Platten (10, 11) Elektroden bilden, die an eine Spannungsquelle (15) angeschlossen sind, und daß die Hydraulikflüssigkeit aus einer elektroviskosen Flüssigkeit besteht.

2. Zweikammer-Motorlager nach Anspruch 1, dadurch gekennzeichnet, dass die Durchlässe (12, 13) schlitzförmig ausgebildet sind und sich über die gesamte Breite der Elektrodenplatten (10, 11) erstrecken.

3. Zweikammer-Motorlager nach Anspruch 1 oder 2, dadurch gekennzeichnet, dass die an die Plattenelektroden (10, 11) angelegte Spannung in Abhängigkeit von der Motordrehzahl steuerbar ist.

4. Zweikammer-Motorlager nach Anspruch 1 oder 2, dadurch gekennzeichnet, dass die Elektrodenspannung in Abhängigkeit vorgegebener Schwingungszustände mittels on-line-Messung steuerbar ist.

5. Zweikammer-Motorlager nach Anspruch 4, dadurch gekennzeichnet, dass die Schwingungszustände durch Relativbewegungen der Befestigungspunkte des Motors ermittelt werden.

6. Zweikammer-Motorlager nach Anspruch 1, dadurch gekennzeichnet, dass die elektroviskose Flüssigkeit aus einer Mischung aus 40-60 Gew.- % Kieselsäure, 30-50 Gew.-% einer organischen Phase mit niedriger Elektrizitätskonstante, 510 Gew.-% Wasser sowie 5 Gew.-% Dispergiermittel besteht.

7. Zweikammer-Motorlager nach Anspruch 6, dadurch gekennzeichnet, dass die organische Phase aus Isododekan besteht.

## Claims

1. Hydraulically damping two-chamber engine mount, in particular for motor vehicles, in which both chambers (1, 2), which are filled with a hydraulic fluid, have rubber elastic circumferential walls (5, 9) and are mechanically separated from one another by a rigid intermediate plate (3) situated transversely to the longitudinal axis of the chambers and between the chambers (1, 2), but are in hydraulic communication by way of a conduit (4) extending through the intermediate plate (3), characterised in that the conduit (4) is bounded by two plane plates (10, 11) arranged in the interior of the intermediate plate (3) parallel to one another and parallel to the upper and underside of the intermediate plate (3), the width of which plane plates and their distance apart defining the cross-section of the conduit, the interior of the conduit having a passage (12) at one end opening into the upper chamber (1) and a passage (13) at the other end opening into the lower chamber, in that the plates (10, 11) from electrodes which are connected to a source of voltage (15), and in that the hydraulic fluid is an electroviscous fluid.

2. Two-chamber engine mount according to claim 1, characterised in that the passages (12, 13) are in the form of slots and extend over the whole width of the electrode plates (10, 11).

3. Two-chamber engine mount according to claim 1 or 2, characterised in that the voltage applied to the plate electrodes (10, 11) is controllable in dependence upon the engine speed.

4. Two-chamber engine mount according to claim 1 or 2, characterised in that the electrode voltage is controllable by on-line measurements in dependence upon given states of vibration.

5. Two-chamber engine mount according to claim 4, characterised in that the states of vibration are determined by relative displacements of the points of attachment of the engine.

6. Two-chamber engine mount according to claim 1, characterised in that the electroviscous fluid consists of a mixture of 40 to 60% by weight silica, 30 to 50% by weight of an organic phase having low electric constants, 5 to 10% by weight water and 5% by weight dispersing agent.

7. Two-chamber engine mount according to claim 6, characterised in that the organic phase is isododecane.

## Revendications

1. Support pour moteur à deux chambres, à amortissement hydraulique, notamment pour des véhicules automobiles, dont les deux chambres (1,2) remplies par un liquide hydraulique comportent des parois circonférentielles (5,9) présentant l'élasticité du caoutchouc et sont séparées mécaniquement l'une de l'autre par l'intermédiaire d'une plaque intercalaire rigide (3) disposée transversalement par rapport à l'axe longitudinal des chambres (1,2) et entre ces dernières, mais sont reliées entre elles par voie hydraulique par l'intermédiaire d'un conduit (4) traversant la plaque intercalaire (3), caractérisé par le fait que le conduit (4) est limité par deux plaques planes (10,11) disposée à l'intérieur de la plaque inter- claire (3) et parallèles entre elles et à la face supérieure et à la face inférieure de la plaque intercalaire (3), et dont la largeur et l'écartement réciproque définissent la section transversale du conduit, l'espace intérieurdu conduit comportant, à une extrémité, un passage (12) aboutissant à la chambre supérieure (1), et à l'autre extrémité, un passage (13) aboutissant à la chambre inférieure, que les plaques (10,11) forment des électrodes raccordées à une source de tension (15) et que le liquide hydraulique est constitué par un liquide électro-visqueux.

2. Support pour moteur à deux chambres suivant la revendication 1, caractérisé par le fait que les passages (12,13) sont réalisés sous la forme de fentes et s'étendent sur toute la largeur des plaques formant électrodes (10,11).

3. Support pour moteur à deux chambres suivant la revendication 1 ou 2, caractérisé par le fait que la tension appliquée aux plaques formant électrodes (10,11) peut être commandée en fonction de la vitesse de rotation du moteur.

4. Support pour moteur à deux chambres suivant la revendication 1 ou 2, caractérisé par le fait que la tension des électrodes peut être commandée en fonction d'états prédéterminés de vibrations au moyen d'une mesure en ligne.

5. Support pour moteur à deux chambres suivant la revendication 4, caractérisé par le fait que les états de vibrations sont déterminés par des déplacements relatifs des points de fixation du moteur.

6. Support pour moteur à deux chambres suivant la revendication 1, caractérisé par le fait que le fluide électro-visqueux est constitué par un mélange de 40-60 % en poids d'acide silicique, 30-50 % en poids d'une phase organique possédant une faible constante diélectrique, 50-10 % en poids d'eau et 5 % en poids d'un agent dispersant.

7. Support pour moteur à deux chambres suivant la revendication 6, caractérisé par le fait que la phase organique est constituée par de l'isododéca- ne.
